# EUROPÄISCHE PATENTANMELDUNG

(11) **EP 4 234 073 A1**
(43) Veröffentlichungstag der Anmeldung: **30.08.2023**
(21) Anmeldenummer: 23157161.3
(22) Anmeldetag: 17.02.2023
(51) Int. Cl.: B01F 23/213, B01F 25/313, B01F 25/32, B01F 35/53, F01N 3/20

(54) **VORRICHTUNG ZUM VERMISCHEN EINES ZUSATZSTOFFES MIT EINEM GASSTROM**

(30) Priorität: 23.02.2022 DE 102022104314
(71) Anmelder: Friedrich Boysen GmbH & Co. KG, 72213 Altensteig (DE)
(72) Erfinder: SAUER, Stefan, 72218 Wildberg (DE); ROGOWSKI, Igor, 72202 Nagold (DE); ANSELM, Robert, 72202 Nagold (DE); FRIESE, Marco, 72285 Pfalzgrafenweiler (DE)
(74) Vertreter: Manitz Finsterwald Patent- und Rechtsanwaltspartnerschaft mbB

(57) **Zusammenfassung**

Die vorliegende Erfindung betrifft eine Vorrichtung (100) zum Vermischen eines Zusatzstoffes mit einem Gasstrom, insbesondere für eine Abgasanlage eines Fahrzeugs mit einer Brennkraftmaschine, umfasst eine von zumindest eines Teils des Gasstroms durchströmbare Mischkammer (102) mit zumindest einer Einlassöffnung (108) durch die bei Betrieb der Vorrichtung ein Haupteintrittsstrom (106) des Gasstroms in die Mischkammer strömt, mit zumindest einer Dosieröffnung (112) und mit zumindest einer Auslassöffnung (114). Ferner umfasst die Vorrichtung eine Dosiereinrichtung (104), mittels derer durch die Dosieröffnung ein Zusatzstoffstrom (110) des Zusatzstoffes in die Mischkammer einbringbar ist, wobei die Einlassöffnung und die Dosieröffnung derart angeordnet und ausgebildet sind, dass der Haupteintrittsstrom und der Zusatzstoffstrom in im Wesentlichen entgegengesetzten Richtungen in die Mischkammer strömen, so dass der Haupteintrittsstrom und der Zusatzstoffstrom aufeinander prallen.

## Beschreibung

Die Erfindung betrifft eine Vorrichtung zum Vermischen eines Zusatzstoffes mit einem Gasstrom, insbesondere für eine Abgasanlage eines Fahrzeugs mit einer Brennkraftmaschine.

Zur Reduktion von Stickoxiden in Abgasen von Kraftfahrzeugen mit Verbrennungsmotoren können Abgasnachbehandlungssysteme, beispielsweise SCR-Systeme (selective catalytic reduction systems) eingesetzt werden. SCR bezeichnet dabei eine chemische Reaktion, nämlich eine selektive katalytische Reduktion, bei der bevorzugt die Stickoxide wie beispielsweise Stickstoffmonoxid und Stickstoffdioxid reduziert, d.h. in unschädliche Stoffe umgewandelt werden. Für die chemische Reaktion muss dem Abgas Ammoniak bzw. eine Harnstofflösung (AdBlue), aus der der Ammoniak durch Thermolyse erzeugt wird, als Zusatzstoff zugemischt werden. Das mit dem Zusatzstoff beaufschlagte Abgas wird dann einem Katalysator zugeführt, in dem die katalytische Reduktion erfolgt.

Eine der Herausforderungen im Bereich von SCR-Systemen und im Speziellen der SCR-Systeme im Nutzfahrzeugbereich sind eine ablagerungsfreie Verdampfung und eine gute Vermischung von geeigneten AdBlue-Dosiermengen mit dem Abgas bei unterschiedlichen Abgasmassenströmen und unterschiedlichen Abgastemperaturen.

Die Eigenschaften der Verdampfung hängen maßgeblich von den zur Verfügung stehenden heißen Flächen, den sogenannten Verdampferflächen, für die Verdampfung des Zusatzstoffes ab. Für eine gute Verdampfung sind große Flächen zu bevorzugen, jedoch ist hierfür ein großes Bauraumvolumen erforderlich. Zudem kann es schwierig sein, eine gleichmäßige AdBlue-Benetzung mit einem diskreten Spraykegel für solche großflächigen Bauformen zu gewährleisten.

Bekannte Lösungsansätze versuchen beispielsweise, die Harnstofflösung in Strömungsrichtung des Abgases zusammen mit dem Abgas durch Sprühverwehungen auf einen zylinderförmige Mantelfläche eines im Abgasstrang angeordneten Rohres aufzubringen. Dies kann jedoch bei geringen Massenströmen des Abgases dazu führen, dass die in das Rohr eingespritzte Harnstofflösung ungehindert und in Abgasrichtung durch das Rohr sprüht und somit nicht schnell verdampft und vermischt und daher nicht vollständig zur chemischen Reaktion mit dem Abgas genutzt werden kann.

Auch die Vermischung des verdampften AdBlue mit dem Abgas ist in vielen Fällen nicht befriedigend. Ein möglichst homogenes Gemisch ist aber eine wichtige Voraussetzung für eine optimale Abgasnachbehandlung.

Außer in der Abgastechnik besteht auch in anderen Bereichen ein Bedarf für ein effizientes Vermischen eines Zusatzstoffes mit einem Gasstrom.

Es ist eine Aufgabe der Erfindung, eine Vorrichtung zu schaffen, die diesbezüglich verbesserte Eigenschaften aufweist. Insbesondere sollen ein Zusatzstoff, z.B. eine Harnstofflösung zur Abgasnachbehandlung, auf eine möglichst große Verdampferfläche aufbringbar sein und eine hohe Verdampfung und eine möglichst homogene Vermischung auch bei einer geringen Abgasströmung erreicht werden können.

Die Lösung dieser Aufgaben erfolgt durch eine Vorrichtung mit den Merkmalen des Anspruchs 1.

Gemäß einem ersten Aspekt der Erfindung weist eine Vorrichtung zum Vermischen eines Zusatzstoffes mit einem Gasstrom, insbesondere für eine Abgasanlage eines Fahrzeugs mit einer Brennkraftmaschine, eine Mischkammer und eine Dosiereinrichtung auf. Die Mischkammer ist von zumindest einem Teil des Gasstroms durchströmbar und umfasst zumindest eine Einlassöffnung durch die bei Betrieb der Vorrichtung ein Haupteintrittsstrom des Gasstroms in die Mischkammer strömt. Ferner umfasst die Mischkammer zumindest eine Dosieröffnung und zumindest eine Auslassöffnung. Mittels der Dosiereinrichtung ist durch die Dosieröffnung ein Zusatzstoffstrom des Zusatzstoffes in die Mischkammer einbringbar, insbesondere als ein Strom von feinen Flüssigkeitströpfchen. Die Einlassöffnung und die Dosieröffnung sind derart angeordnet und ausgebildet, dass der Haupteintrittsstrom und der Zusatzstoffstrom in im Wesentlichen entgegengesetzten Richtungen in die Mischkammer strömen, so dass der Haupteintrittsstrom und der Zusatzstoffstrom aufeinander prallen. Die Vorrichtung ist somit derart ausgestaltet, dass die beiden Stoffströme - bildlich gesprochen - in einer Prallströmung aufeinander treffen.

Durch das Aufeinanderprallen des Haupteintrittsstroms und des Zusatzstoffstroms werden die beiden Ströme derart miteinander vermengt, dass der gasförmige Haupteintrittsstrom zusammen mit dem flüssigen Zusatzstoffstrom ein Gemisch ausbilden. Das Aufeinanderprallen des Haupteintrittsstroms mit dem Zusatzstoffstrom muss in diesem Zusammenhang nicht zwangsläufig bedeuten, dass einer der beiden Ströme von seiner Strömungsrichtung abgelenkt wird, insbesondere wenn das Verhältnis von flüssigem Zusatzstoffstrom zu gasförmigen Haupteintrittsstrom sehr klein, beispielsweise 1 :500, ist. Das direkte Aufeinanderprallen des Haupteintrittsstroms mit dem Zusatzstoffstrom kann zu einer Aufsplittung, Aufspreizung bzw. Aufspaltung des Zusatzstoffstroms führen, so dass sich der Zusatzstoffstrom im Inneren der Mischkammer verteilt. Insbesondere eine hohe relative Einströmgeschwindigkeit des Haupteintrittsstroms durch die Einlassöffnung in die Mischkammer kann eine vorteilhafte Verteilung des Zusatzstoffstroms in der Mischkammer begünstigen. Die Verteilung des Zusatzstoffstroms in der Mischkammer kann bewirken, dass der Zusatzstoffstrom auf heiße Verdampferflächen trifft, was die Verdampfung des Zusatzstoffes effizienter gestaltet, insbesondere wenn diese Flächen dabei möglichst senkrecht angeströmt werden. Der Zusatzstoffstrom oder Teile davon kann bzw. können in Abhängigkeit von den Eigenschaften des Massestroms des Haupteintrittsstroms (z.B. in Abhängigkeit der Einströmgeschwindigkeit des Haupteintrittsstroms in die Mischkammer) an unterschiedlichen Stellen der Verdampferflächen auftreffen, z.B. bei relativ hoher Einströmgeschwindigkeit, eher an einem oberen Wandabschnitt in der Nähe der Dosieröffnung und bei relativ niedriger Einströmgeschwindigkeit eher an einem unteren Wandabschnitt in der Nähe der Eintrittsöffnung. Des Weiteren kann durch die Anordnung und Ausgestaltung der Einlassöffnung und der Dosieröffnung und dem damit verbundenen Einbringen des Zusatzstoffstroms und des Haupteintrittsstroms in entgegengesetzter Richtung in die Mischkammer auch bei einer geringen Strömung des Haupteintrittsstroms, beispielsweise bei einer geringen Last der Brennkraftmaschine, eine gute Vermischung mit dem Zusatzstoffstrom erreicht werden, da lediglich eine Verlagerung der Prallströmungsstruktur erfolgt, ohne dass die grundlegende Funktionalität der Vorrichtung leidet. Durch das direkte Aufeinanderprallen des Haupteintrittsstroms mit dem Zusatzstoffstrom kann außerdem die Verweildauer des nach dem Aufprallen verteilten Zusatzstoffes in der Mischkammer erhöht werden, was wiederum zu einer besseren Verdampfung des Zusatzstoffes führt.

Es kann vorgesehen sein, die Eindosierung des Zusatzstoffes in Abhängigkeit zumindest einer charakteristischen Eigenschaft des Gasstroms bzw. des Haupteintrittsstroms vorzunehmen. Eine charakteristische Eigenschaft ist beispielweise ein Massenstrom pro Zeiteinheit. Die Anpassung der Eindosierung an den jeweils vorliegenden Gasstrom bzw. Haupteintrittsstrom verhindert u.a. eine Übersättigung des Gasstroms mit dem Zusatzstoff und/oder stellt eine geeignete Ausbildung der Prallströmung sicher, um zu gewährleisten, dass die Vermischung des Gases mit dem Zusatzstrom in einem geeigneten Bereich der Mischkammer erfolgt. Beispielsweise kann dadurch verhindert werden, dass bei einem vergleichsweise schwachen Haupteintrittsstrom Zusatzstoff in den Bereich der Einlassöffnung gelangt oder sogar durch diese tritt. Umgekehrt kann der Zusatzstoffstrom bei einem starken Haupteintrittsstrom verstärkt werden.

Die Brennkraftmaschine kann als ein Verbrennungsmotor, insbesondere als Dieselmotor, ausgebildet sein. Bei einem Betrieb der Brennkraftmaschine entstehen Abgase, die als Gasstrom über eine mit der Brennkraftmaschine verbundenen Abgasanlage nach außen geleitet werden. Die Abgasanlage kann eine hierin beschriebene Vorrichtung umfassen.

Der Zusatzstoff kann ein flüssiges Reduktionsmittel wie beispielsweise eine Harnstofflösung sein, welche durch das Abgas verdampft und den für die Abgasreinigung nötigen Ammoniak mittels Thermo- bzw. Hydrolyse bereitstellt. Das flüssige Reduktionsmittel kann in einem Tank gelagert sein und mittels einer Zuführleitung der Dosiereinrichtung zugeführt werden.

Die Dosiereinrichtung kann dazu ausgebildet sein, den Zusatzstoff beispielsweise mit Hilfe einer Einspritzdüse zu zerstäuben, d.h. den Zusatzstoff in kleine Tröpfchen aufzuteilen und in Form eines Sprühkegels in die Mischkammer der Vorrichtung einzubringen.

Die Mischkammer kann als im Wesentlichen abgeschlossener Raum, beispielsweise eine durch Bleche begrenzte Kammer, ausgebildet sein. Im Inneren der Mischkammer können sich Strömungen vermischen bzw. einströmendes Gas mit eingespritzten Flüssigkeiten, beispielsweise Harnstoff, vereinen. Durch die Einlassöffnung kann zumindest ein Teil des Gasstroms, beispielsweise des Abgases, in die Mischkammer einströmen. Durch die Dosieröffnung kann ein Zusatzstoff, beispielsweise eine Harnstofflösung, in die Mischkammer eingebracht, insbesondere eingespritzt werden. Zum Ableiten bzw. Ausströmen des in die Mischkammer bei Betrieb der Vorrichtung erzeugten Gemischs, kann die Mischkammer zumindest eine Auslassöffnung umfassen. Die Auslassöffnung kann mit der Abgasanlage eines Fahrzeugs verbunden sein.

Weitere Ausführungsformen der vorliegenden Erfindung sind nachfolgend sowie in den abhängigen Ansprüchen und den beigefügten Zeichnungen angegeben.

Bei einigen Ausführungsformen sind die Einlassöffnung und die Dosieröffnung an einander gegenüberliegenden Wandabschnitten der Mischkammer angeordnet. Die einander gegenüberliegenden Wandabschnitte können die Mischkammer begrenzen und beispielsweise aus Blechen ausgebildet sein. Durch diese räumliche Anordnung der Einlassöffnung und der Dosieröffnung wird das Aufeinandertreffen des Haupteintrittsstroms und des Zusatzstoffstroms in der Mischkammer, also eine Prallströmung, auf einfache Weise erzeugt.

Die Einlassöffnung kann im Wesentlichen rund oder rechteckig ausgestaltet sein. Andere Ausgestaltungen der Einlassöffnung, beispielsweise oval oder polygonal, sind ebenfalls möglich.

Eine Mittelachse des Haupteintrittsstroms und eine Mittelachse des Zusatzstoffstroms können im Wesentlichen koaxial angeordnet sein. Die Mittelachse des Haupteintrittsstroms kann ausgehend von der Einlassöffnung in Richtung der Dosieröffnung verlaufen, wohingegen die Mittelachse des Zusatzstoffstroms ausgehend von der Dosieröffnung in Richtung der Haupteintrittsöffnung verlaufen kann. Die Mittelachse des Haupteintrittsstroms und die Mittelachse des Zusatzstoffstroms können im Wesentlichen koaxial sein oder parallel versetzt zueinander verlaufen. Dementsprechend können auch die Strömungsrichtungen des Haupteintrittsstroms und des Zusatzstoffstroms im Wesentlichen koaxial ausgerichtet sein. Da der Zusatzstoffstrom in Form eines Sprühkegels in entgegengesetzter Richtung zu dem Haupteintrittsstrom in die Mischkammer einbringbar sein kann, können sich der Haupteintrittsstrom und Teile des Zusatzstoffstroms auch in einem Winkel von kleiner 180° in der Mischkammer treffen.

In einer anderen Ausführungsform kann die eine Mittelachse des Zusatzstoffstroms in einer Mittelebene des Haupteintrittsstroms liegen. Die Mittelebene des Haupteintrittsstroms ist insbesondere in etwa mittig bezüglich der Eintrittsöffnung angeordnet.

Bei einigen Ausführungsformen kann die zumindest eine Auslassöffnung der Mischkammer an einem Wandabschnitt angeordnet sein, der in Richtung der Mittelachse des Haupteintrittsstroms oder in Richtung der Mittelachse des Zusatzstoffstroms gesehen zwischen der Dosieröffnung und der Einlassöffnung liegt, beispielsweise an einer Seitenwand der Kammer. Die Auslassöffnung kann im Wesentlichen kreisrund, oval oder polygonal ausgebildet und so dimensioniert sein, dass beispielsweise eine gewisse mittlere Verweildauer des Zusatzstoffes in der Mischkammer sichergestellt ist. Der Wandabschnitt, der zwischen der Dosieröffnung und der Einlassöffnung angeordnet ist, kann aus Blechen ausgebildet sein und mit den einander gegenüberliegenden Wandabschnitten der Mischkammer (z.B. einstückig) verbunden sein.

Die Auslassöffnung der Mischkammer kann einen Gasauslass der Vorrichtung bilden, so dass ein Gasstrom aus der Mischkammer durch die Auslassöffnung aus der Vorrichtung strömen kann. Die Vorrichtung weist beispielsweise keine weitere Auslassöffnung auf, sodass in die Vorrichtung strömendes Gas nur über die eine Auslassöffnung ausströmen kann. Ein Gasstrom, der aus der Mischkammer durch die Auslassöffnung der Vorrichtung strömt, kann eine Strömungsrichtung aufweisen, die im Wesentlichen senkrecht zu der Mittelachse des Haupteintrittsstroms oder zu der Mittelachse des Zusatzstoffstroms ausgerichtet ist.

Bei einigen Ausführungsformen kann die Mischkammer in einer Ebene parallel zu der Mittelachse des Haupteintrittsstroms und/oder des Zusatzstoffstroms kreisförmig, toroidal oder rechteckig ausgebildet sein. Der Querschnitt der Mischkammer in der Ebene senkrecht zu der Mittelachse des Haupteintrittsstroms und des Zusatzstoffstroms kann ebenfalls bedarfsgerecht gewählt werden. Bei einer im Wesentlichen kugelförmigen Ausführungsform der Vorrichtung kann der Querschnitt der Mischkammer in dieser Ebene im Wesentlichen kreisförmig ausgebildet sein, bei einer im Wesentlichen zylindrischen Ausführungsform kann der Querschnitt der Mischkammer in dieser Ebene im Wesentlichen rechteckig ausgebildet sein. Andere Querschnitte der Mischkammer, wie beispielsweise ovale Querschnitte, sind in anderen Ausführungsformen ebenfalls möglich.

Bei einigen Ausführungsformen kann zumindest ein die Einlassöffnung aufweisender Wandabschnitt der Mischkammer zumindest abschnittsweise gekrümmt ausgestaltet sein, insbesondere kann der zumindest eine Wandabschnitt benachbart der Einlassöffnung U-förmig ausgestaltet sein. Der U-förmige Wandabschnitt kann asymmetrische Schenkel aufweisen, die auch nicht parallel zueinander verlaufen können. Ferner können die beiden Schenkel des U-förmigen Wandabschnitts eine unterschiedliche Länge aufweisen. Bei einer U-förmigen Ausgestaltung des zu der Einlassöffnung benachbarten Wandabschnitts kann eine in das Innere des Mischkörpers ragende Einbuchtung gebildet werden, die die Einlassöffnung trägt. Die Einbuchtung kann zu einem besseren Drall bzw. zu einer besseren Verwirbelung eines Gasgemischs in der Mischkammer beitragen.

Die zwischen der Einlassöffnung und der Dosieröffnung liegenden (seitlichen) Wandabschnitte können zumindest abschnittsweise gekrümmt (z.B. "bauchig") ausgebildet sein, insbesondere in einer Ebene gesehen, die parallel zu dem Haupteintrittsstrom und/oder dem Zusatzstoffstrom angeordnet ist oder die deren Mittelachse enthält. Beispielsweise weist die Mischkammer eine toroidale, "kugelige" oder zylinderartige Grundform auf. Durch diese Ausgestaltung kann eine möglichst große Fläche, auf die ein Gas-Zusatzstoff-Gemisch im Inneren der Mischkammer treffen kann, bereitgestellt werden. Eine möglichst große Fläche erleichtert eine bessere Verdampfung des Gas-Zusatzstoff-Gemischs. Zusätzlich können die seitlichen Wandabschnitte eine Drallbildung in dem Strömungsmuster des Gasgemisches in der Mischkammer unterstützen.

Bei einigen Ausführungsformen kann die Mischkammer zumindest eine Nebenöffnung aufweisen, durch die bei Betrieb der Vorrichtung ein Nebeneintrittsstrom des Gasstroms in die Mischkammer strömt. Die zumindest eine Nebenöffnung kann an einem Wandabschnitt im Bereich oder benachbart der Eintrittsöffnung der Mischkammer angeordnet sein oder an einem seitlichen Wandabschnitt der Mischkammer. Durch die zumindest eine Nebenöffnung kann zusätzlich zur Eintrittsöffnung ein Teil des Gasstroms in die Mischkammer strömen. Der Nebeneintrittsstrom kann einer Druckverlustreduzierung in der Mischkammer entgegenwirken.

Der zumindest einen Nebenöffnung kann zumindest ein Strömungsleitabschnitt zugeordnet sein, insbesondere ein ebener und/oder gekrümmter Wandabschnitt, der derart ausgestaltet und angeordnet sein kann, dass der Nebeneintrittsstrom bei dem Eintritt in die Mischkammer abgelenkt wird. Der zumindest eine Strömungsleitabschnitt der Nebenöffnung kann aus einem Wandabschnitt der Mischkammer gebildet sein. Beispielsweise kann ein Teil des Wandabschnitts ausgestanzt sein und nach innen, d.h. in die Mischkammer hinein, gebogen sein, um den Gasstrom, der durch die Nebenöffnung in die Mischkammer strömt, in geeigneter Form abzulenken. Dies kann eine Drallbildung im Inneren der Mischkammer weiter unterstützen und eine Vermischung des Abgases mit dem Zusatzstoff kann beschleunigt werden. Es können eine Mehrzahl von Nebenöffnungen mit jeweils zumindest einem Strömungsleitabschnitt an der Mischkammer angeordnet sein.

Bei einigen Ausführungsformen kann der Dosiereinrichtung eine Abschirmeinrichtung zugeordnet sein, die zumindest eine Spülöffnung aufweist, durch die ein Teil des Gasstroms als Spülstrom in einen Eindosierbereich der Dosiereinrichtung gelangen kann, insbesondere kann der Spülöffnung eine Strömungsleiteinheit zugeordnet sein, die beispielsweise eine Drallbildung der Spülströmung bewirkt oder zumindest unterstützt. Die Dosiereinrichtung kann - wie bereits erwähnt - eine Einspritzdüse umfassen. Die Abschirmeinrichtung kann die Einspritzdüse vor direkter Anströmung schützen und zugleich durch die Spülöffnungen dafür sorgen, dass zumindest ein Teil des in die Vorrichtung einströmenden Gasstroms durch die Spülöffnungen in die Abschirmeinrichtung und damit zu der Dosiereinrichtung strömt und so die Einspritzdüse reinigt bzw. das Entstehen von Ablagerungen an der Einspritzdüse verhindert.

Bei einigen Ausführungsformen kann die Mischkammer zumindest abschnittsweise von einem Gehäuse umgeben sein, das einen Gaseinlass für den Gasstrom aufweist, wobei das Innere der Mischkammer zumindest über die Einlassöffnung mit dem Inneren des Gehäuses in Verbindung steht. Das Gehäuse kann die Mischkammer vollständig oder nur teilweise umgeben. Die Mischkammer kann in dem Gehäuse derart angeordnet sein, dass der Gasstrom, der durch den Gaseinlass in das Gehäuse strömt, nicht direkt in die Mischkammer strömen kann. In anderen Worten, die Einlassöffnung und die Dosieröffnung der Mischkammer können bezüglich des Gehäuses so angeordnet sein, dass die Strömungsrichtungen des Haupteintrittsstroms und des Zusatzstoffstroms verschieden zu einer Strömungsrichtung des in das Gehäuse einströmenden Gasstroms ausgerichtet sind. Beispielsweise ermöglichen die Auslassöffnung der Mischkammer und der Gaseinlass ein axiales Aus- bzw. Einströmen des Gases aus der bzw. in die Vorrichtung. In einigen Ausführungsformen kann die Auslassöffnung auch in einem Winkel, beispielsweise um 90° zu dem Gaseinlass angeordnet sein.

Bei einigen Ausführungsformen kann die Auslassöffnung der Mischkammer mit einem Kanal in Verbindung stehen, durch den der aus der Mischkammer austretende Gasstrom aus dem Gehäuse abgeführt wird. Hierzu können Öffnungen in den seitlichen Wandabschnitten der Mischkammer angeordnet sein, durch die der Gasstrom aus der Mischkammer in den Kanal geleitet werden kann.

Bei einer solchen Ausführungsform kann der Kanal die Mischkammer außenseitig in einem Bereich zwischen der Dosieröffnung und der Einlassöffnung in Umfangsrichtung zumindest abschnittsweise, insbesondere vollständig umgeben. Diese Ausgestaltung ermöglicht eine für den jeweiligen Anwendungsfall optimierte Anordnung der Auslassöffnung, d.h. die Auslassöffnung kann an einer beliebigen Stelle an dem Kanal angeordnet sein. Somit können bauraumbedingte Randbedingungen berücksichtigt und die Vorrichtung flexibel angepasst werden.

Denkbar ist, dass die Dosiereinrichtung von dem Gehäuse getragen und beabstandet von der Einlassöffnung angeordnet ist. Die Dosiereinrichtung kann über eine Haltevorrichtung an dem Gehäuse der Vorrichtung befestigt sein. Die Haltevorrichtung kann das Gehäuse gasdicht abschließen, sodass kein Gasstrom durch die Haltevorrichtung aus dem Gehäuse strömen kann.

Bei einigen Ausführungsformen kann zwischen der Mischkammer und dem Gehäuse zumindest abschnittsweise ein Spalt gebildet sein, der in Betrieb von zumindest einem Teil des durch den Gaseinlass in das Gehäuse eintretenden Gasstroms durchströmt wird, so dass die Mischkammer zumindest abschnittsweise von außen erwärmt wird. Dies verbessert die Verdampfung von auf Wandabschnitte treffenden Tröpfchen des Zusatzstoffes, was insbesondere bei einem Kaltstart einer Brennkraftmaschine, die mit einer die erfindungsgemäße Vorrichtung umfassenden Abgasanlage verbunden ist, von Vorteil ist. Weist die Vorrichtung - wie oben beispielhaft beschrieben - einen Kanal auf, der mit der zumindest einen Auslassöffnung der Mischkammer verbunden ist, so kann der Kanal in dem Spalt zwischen der Mischkammer und dem Gehäuse angeordnet sein. Dies ermöglicht eine Umströmung des Kanals durch den in das Gehäuse einströmenden Gasstroms, der dadurch den Kanal von außen erwärmt. Der Kanal kann auch von innen durch den aus der Mischkammer ausströmenden Gasstrom erwärmt werden. Somit kann eine eventuell im Inneren der Mischkammer nicht vollständige Verdampfung des Gas-Zusatzstoff-Gemischs auch noch in dem Kanal oder an Wandflächen des Kanals stattfinden, bevor das Gemisch durch die Auslassöffnung austritt.

Bei einigen Ausführungsformen kann in oder in Strömungsrichtung vor dem Spalt zumindest eine Gasführungskomponente angeordnet sein, um den Gasstrom in dem Spalt und/oder in den Spalt zu beeinflussen. Die Gasführungskomponente kann Öffnungen aufweisen, durch die der Gasstrom in den Spalt einströmen kann. Es ist aber auch möglich, dass die Gasführungskomponente an bestimmten Stellen keine Öffnungen aufweist, sodass der Spalt in diesen Bereichen blockiert ist. Die Öffnungen können derart ausgestaltet sein, dass der durch die Öffnungen in den Spalt einströmende Gasstrom abgebremst, aufgeteilt und/oder abgelenkt wird. Beispielsweise kann durch die Gasführungskomponente ein Teil des in den Spalt einströmenden Gasstroms als Haupteintrittsstrom in Richtung der Einlassöffnung der Mischkammer gelenkt werden, während ein anderer Teil des Gasstroms in Richtung der Dosieröffnung der Mischkammer gelenkt wird. Durch die räumliche Anordnung der Einlassöffnung der Mischkammer und/oder durch eine geeignete Ausgestaltung der Gasführungskomponente kann bei Bedarf ein direktes Anströmen der Einlassöffnung verhindert werden.

Die Dosieröffnung kann derart angeordnet und ausgestaltet sein, dass ein Teil des Gasstroms in dem Gehäuse als Hinterströmung zusammen mit dem Zusatzstoffstrom durch die Dosieröffnung in die Mischkammer strömt. Ein durch die Gasführungskomponente in Richtung der Dosiereinrichtung abgelenkter Teil des in das Gehäuse bzw. in den Spalt einströmenden Gasstroms kann die Hinterströmung bilden. Die gasförmige Hinterströmung kann das Einströmen des Zusatzstoffstroms in die Mischkammer unterstützen und eine Stauströmung mit dem Haupteintrittsstrom erzeugen. Durch das Aufeinandertreffen des Haupteintrittsstroms mit der Hinterströmung werden die Ströme (und damit zumindest ein Teil des Zusatzstoffstroms) derart abgelenkt, dass die Strömungsrichtung des Haupteintrittsstroms und die Strömungsrichtung der Hinterströmung nach dem Aufeinandertreffen in radialer Richtung nach außen gedrängt werden, idealisiert im Wesentlichen senkrecht zu den Strömungsrichtungen der in die Mischkammer einströmenden Gasströme. Das direkte Aufeinandertreffen des Haupteintrittsstroms mit der Hinterströmung und dem Zusatzstoffstrom kann einerseits eine Verwirbelung des Haupteintrittsstroms mit dem Zusatzstoffstrom und der Hinterströmung bewirken, wodurch eine bessere Durchmischung der beiden Gasströme (Haupteintrittsstrom und Hinterströmung) mit dem flüssigen Zusatzstoffstrom erreicht wird. Andererseits können die nach außen gedrängten Ströme auf heiße Verdampferflächen treffen, was die Verdampfung des Zusatzstoffes effizienter gestaltet, insbesondere wenn diese Flächen dabei möglichst senkrecht angeströmt werden.

Bei einigen Ausführungsformen kann eine Stromleiteinrichtung vorgesehen sein, die zur Beeinflussung der Hinterströmung vor dem Eintritt in die Dosieröffnung ausgebildet ist. Die Stromleiteinrichtung kann beispielsweise als Lochblech ausgebildet sein und/oder Leitflächen umfassen. Durch die Ausgestaltung der Stromleiteinrichtung kann der Anteil des in die Mischkammer einströmenden Gasstroms, der die Hinterströmung bildet, im Vergleich zu dem Anteil des in die Mischkammer einströmenden Gasstroms, der den Haupteintrittsstrom bildet, festgelegt werden. Die Stromleiteinrichtung kann eine Drallbildung des Gasstroms der durch die Stromleiteinrichtung hindurchströmt ermöglichen.

Die Stromleiteinrichtung kann ein separates Bauteil umfassen und/oder sie kann durch zumindest eine Komponente gebildet sein, die - falls vorgesehen - an der Abschirmeinrichtung und/oder an der Mischkammer ausgebildet ist, insbesondere in Form eines an - falls vorgesehen - der Abschirmeinrichtung und/oder an der Mischkammer ausgebildeten Kragens. Die Stromleiteinrichtung kann den Raum, in dem die Dosiereinrichtung angeordnet ist, begrenzen.

Bevorzugt ist die Vorrichtung derart ausgestaltet, dass der Haupteintrittsstromanteil an dem Gasstrom in Betrieb größer ist als der Anteil der Hinterströmung und/oder der Anteil der Hinterströmung größer ist als der Anteil des gasförmigen Spülstroms, wobei der Haupteintrittsstrom 70% bis 30%, bevorzugt 60% bis 40%, insbesondere 55% bis 45% des Gasstroms ausmachen kann, und/oder die Hinterströmung 60% bis 30%, bevorzugt 50% bis 35%, insbesondere 45% bis 40% des Gasstroms ausmachen kann, und/oder der Spülstrom 20% bis 1 %, bevorzugt 15% bis 5%, insbesondere 12% bis 8% des Gasstroms ausmachen kann. Als vorteilhaft hat sich eine Aufteilung des Gasstroms erwiesen, bei dem ein Großteil, also mehr als 50% des in das Gehäuse einströmenden Gasstroms, als Haupteintrittsstrom in die Mischkammer strömt. Für die Aufteilung des in das Gehäuse einströmenden Gasstroms auf die verschiedenen Teilströme, insbesondere der Haupteintrittsstrom, der Hinterströmung und der Spülströmung, können eine Vielzahl von Faktoren und konstruktive Maßnahmen beitragen. Beispielsweise können die Größe, und Anordnung der Öffnungen oder Leitelemente oder -flächen der Gasführungskomponente oder der Stromleitungseinrichtungen sowohl die Verteilung des einströmenden Gasstroms als auch den durch die Vorrichtung erzeugten Gegendruck beeinflussen. Gleiches gilt u.a. auch für die Dimensionierung des Spalts und die geometrische Ausgestaltung der Mischkammer. Ebenso kann die Aufteilung von einer Strömungsgeschwindigkeit oder einem Gasdruck des in das Gehäuse der Vorrichtung einströmenden Gasstroms abhängig sein. Bei einer Verwendung der Vorrichtung in einer Abgasanlage kann der Gasdruck eine Funktion des Lastzustandes der entsprechenden Brennkraftmaschine sein.

Auch ein evtl. vorhandener Nebeneintrittsstrom sollte in der Regel kleiner ausgebildet sein als der Haupteintrittsstrom. Der Nebeneintrittsstrom kann jedoch grö-ßer, gleich oder kleiner sein als der Anteil der Hinterströmung am Gasstrom.

Bei einigen Ausführungsformen kann die Vorrichtung ferner zumindest eine weitere Dosiereinrichtung umfassen, mittels derer durch die Dosieröffnung der Mischkammer oder durch eine weitere Dosieröffnung der Mischkammer ein weiterer Zusatzstoffstrom des Zusatzstoffes in die Mischkammer einbringbar ist. Die Einlassöffnung und die Dosieröffnung oder die weitere Dosieröffnung können derart angeordnet und ausgebildet sein, dass der Haupteintrittsstrom und zumindest einer der Zusatzstoffströme (bevorzugt beide) in im Wesentlichen entgegengesetzten Richtungen in die Mischkammer strömen, so dass der Haupteintrittsstrom und der Zusatzstoffstrom aufeinander prallen.

Die vorliegende Erfindung betrifft ferner eine Abgasanlage, die eine Vorrichtung gemäß zumindest einer der vorstehend beschriebenen Ausführungsformen aufweist.

Die Erfindung betrifft auch ein Fahrzeug mit einer Brennkraftmaschine, die mit einer Abgasanlage der vorstehend beschriebenen Art verbunden ist.

Die Erfindung wird nachfolgend anhand von Ausführungsbeispielen lediglich beispielhaft unter Bezugnahme auf die Zeichnungen beschrieben. Es zeigen:
- Fig. 1A: zeigt eine schematische Darstellung einer Ausführungsform der erfindungsgemäßen Vorrichtung,
- Fig. 1B: zeigt eine schematische Darstellung einer weiteren Ausführungsform der erfindungsgemäßen Vorrichtung,
- Fig. 2: zeigt eine perspektivische Darstellung einer Eingangsseite einer zylinderförmigen Ausführungsform der erfindungsgemäßen Vorrichtung,
- Fig. 3: zeigt eine perspektivische Darstellung einer Ausgangsseite der Ausführungsform aus Fig. 2,
- Fig. 4A: zeigt eine Schnittdarstellung der Ausführungsform aus Fig. 2,
- Fig. 4B: zeigt eine schematische Darstellung der Verteilung des Zusatzstoffstroms bei einer relativ hohen Einströmgeschwindigkeit des Haupteintrittsstroms der Ausführungsform aus Fig. 2,
- Fig. 4C: zeigt eine schematische Darstellung der Verteilung des Zusatzstoffstroms bei einer relativ niedrigen Einströmgeschwindigkeit des Haupteintrittsstroms der Ausführungsform aus Fig. 2,
- Fig. 5: zeigt eine perspektivische Darstellung der Ausführungsform aus Fig. 2 ohne Gehäuse,
- Fig. 6 und 7: zeigen verschiedene Schnitte der Ausführungsform aus Fig. 2,
- Fig. 8 und 9: zeigen verschiedene Schnitte einer leicht veränderten Ausführungsform aus Fig. 2,
- Fig. 10: zeigt eine perspektivische Darstellung einer Eingangsseite einer kugelförmigen Ausführungsform einer erfindungsgemäßen Vorrichtung,
- Fig. 11: zeigt eine Schnittdarstellung in Seitenansicht der kugelförmigen Ausführungsform aus Fig. 10 und
- Fig. 12: zeigt eine Draufsicht der kugelförmigen Ausführungsform aus Fig. 10 mit alternativen Austrittrohranordnungen.

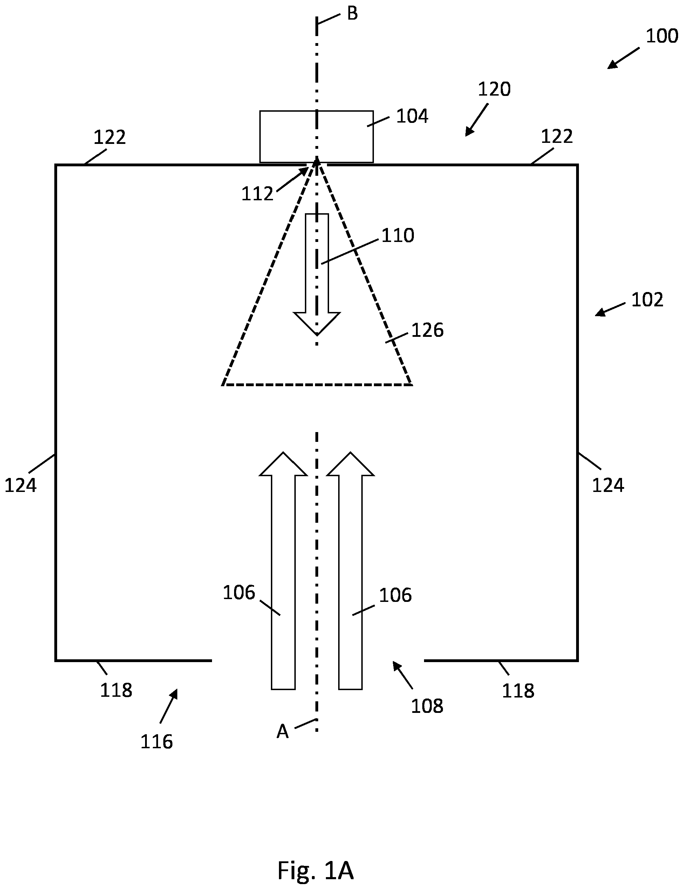

In Fig. 1A ist eine schematische Darstellung einer Vorrichtung 100 zum Vermischen eines Zusatzstoffes mit einem Gasstrom, beispielsweise Abgasstrom, gezeigt. Diese kann in eine Abgasreinigungseinrichtung integriert bzw. einer solchen Einrichtung vorgeschaltet sein, mit der Abgase einer Brennkraftmaschine gereinigt werden, unter anderem mittels eines SCR-Verfahrens.

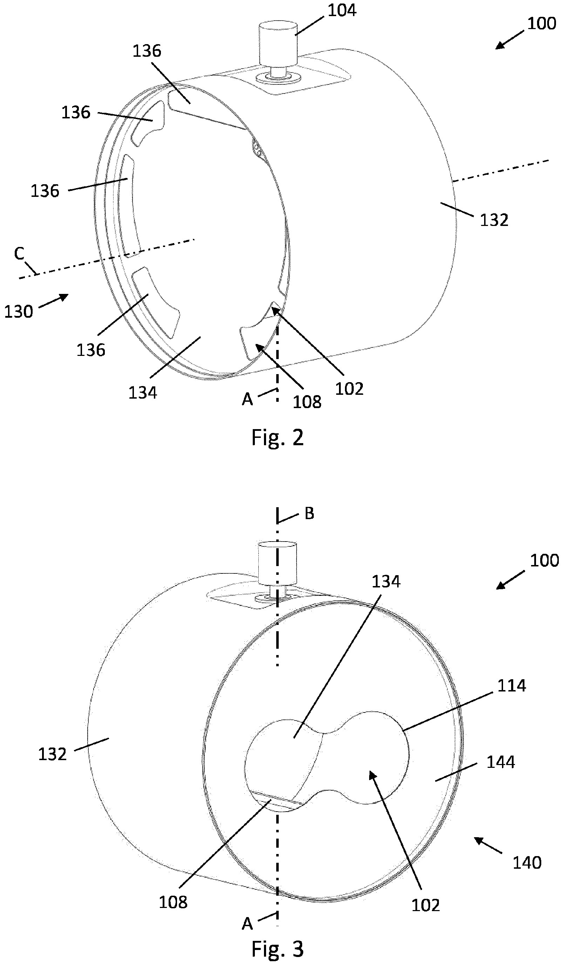

Die Vorrichtung 100 umfasst eine Mischkammer 102 und eine Dosiereinrichtung 104. Die Mischkammer 102 ist zumindest von einem Teil eines Gasstroms durchströmbar und weist zumindest eine Einlassöffnung 108, eine Dosieröffnung 112 und eine Auslassöffnung 114 (in Fig. 1A nicht gezeigt, siehe z.B. Fig. 3) auf. Durch die Einlassöffnung 108 strömt bei Betrieb der Vorrichtung 100 ein Haupteintrittsstrom 106 des Gasstroms in die Mischkammer 102. Durch die Dosieröffnung 112 wird bei Betrieb der Vorrichtung 100 mittels der Dosiereinrichtung 104 ein Zusatzstoffstrom 110 eines Zusatzstoffes in die Mischkammer 102 eingebracht. Die Dosiereinrichtung 104 kann an der Kammer 102 angebracht sein.

Die Einlassöffnung 108 und die Dosieröffnung 112 sind derart angeordnet und ausgebildet, dass der Haupteintrittsstrom 106 und der Zusatzstoffstrom 110 in im Wesentlichen entgegengesetzte Richtungen in die Mischkammer 102 strömen, sodass der Haupteintrittsstrom 106 und der Zusatzstoffstrom 110 in der Mischkammer 102 aufeinander prallen. Der Begriff "im Wesentlichen" ist in diesem Zusammenhang dahingehend zu verstehen, dass die Strömungsrichtungen des Haupteintrittsstroms 106 und des Zusatzstoffstroms 110 zwar entgegensetzte Richtungen aufweisen (Prallströmung), aber nicht streng parallel oder koaxial zueinander ausgerichtet sein müssen, was einem Winkel von 180° zwischen den Strömungen entsprechen würde. Eine Abweichung der Mittelachse B des Zusatzstoffstroms 110 von der Mittelachse A des Haupteintrittsstroms 106 kann zwischen +45° und -45° (entspricht einem Winkel zwischen den Mittelachsen A, B von 215° bzw. 135°), insbesondere zwischen +20° und -20°, bevorzugt zwischen +10° und - 10° und besonders bevorzugt zwischen +5° und -5° betragen. Durch die entgegensetzten Strömungsrichtungen des Haupteintrittsstroms 106 und des Zusatzstoffstroms 110 prallen die beiden Strömungen in der Mischkammer 102 aufeinander. Durch eine Steuerung / Regelung der Dosiereinrichtung 104 kann der Strom 110 an den Strom 106 angepasst werden, um deren Aufeinanderprallen in einem geeigneten Bereich im Inneren der Kammer 102 sicherzustellen.

Die Mischkammer 102 weist eine erste Seite 116 und eine zweite Seite 120 auf, die sich einander gegenüberliegen. Die erste Seite 116 umfasst einen ersten Wandabschnitt 118 an dem die Einlassöffnung 108 der Mischkammer 102 angeordnet ist. Die zweite Seite 120 umfasst einen zweiten Wandschnitt 122 an dem die Dosieröffnung 112 der Mischkammer 102 angeordnet ist. Insbesondere an Randbereichen des ersten Wandabschnitts 118 bzw. des zweiten Wandschnitts 122 können auch gekrümmte Abschnitte vorgesehen sein. Die Mischkammer 102 weist zudem zumindest einen seitlichen Wandabschnitt 124 auf, der den ersten Wandabschnitt 118 und den zweiten Wandabschnitt 122 verbindet und der zwischen der ersten Seite 116 und der zweiten Seite 120 der Mischkammer 102 angeordnet ist. Der erste Wandabschnitt 118, der zweite Wandabschnitt 122 und/oder der seitliche Wandabschnitt 124 können eben oder gekrümmt ausgebildet sein, wobei gekrümmte Wandabschnitte 118, 122, 124 eine Drallbildung der Gasströme im Inneren der Mischkammer 102 unterstützen können. Insbesondere hat sich ein seitlicher Wandabschnitt 124 als vorteilhaft erwiesen, der in einem Querschnitt in einer Ebene, die die Mittelachse A des Haupteintrittsstroms 106 und/oder die Mittelachse B des Zusatzstoffstroms 110 enthält, eine nierenförmige Gestalt aufweist. Ein Querschnitt der Mischkammer 102 senkrecht zu der Mittelachse A des Haupteintrittsstroms 106 und/oder zu der Mittelachse B des Zusatzstoffstroms 110 kann rechteckig oder kreisförmig ausgebildet sein. Die Mischkammer 102 kann aber auch alternative Geometrien bzw. Querschnitte, wie beispielsweise oval oder polygonal, aufweisen.

Die Dosiereinrichtung 104 ist an der zweiten Seite 120 der Mischkammer 102 angeordnet und ist dazu ausgebildet, über eine Einspritzeinrichtung, beispielsweise über eine Düse, einen Zusatzstoff durch die Dosieröffnung 112 in die Mischkammer 102 einzubringen. Der Zusatzstoff kann durch die Einspritzeinrichtung beispielsweise in Form eines Sprühkegels 126 in die Mischkammer 102 eingespritzt werden.

Der Haupteintrittsstrom 106 strömt im Wesentlichen symmetrisch zu der Mittelachse A durch die Einlassöffnung 108 in die Mischkammer 102. Die Mittelachse A des Haupteintrittsstroms 106 verläuft in etwa mittig durch die Einlassöffnung 108. Der Haupteintrittsstrom 106 strömt dabei auf die Dosieröffnung 112 zu. Der Zusatzstoffstrom 110 strömt im Wesentlichen symmetrisch zu der Mittelachse B durch die Dosieröffnung 112 in die Mischkammer 102. Die Mittelachse B des Zusatzstoffstroms 110 verläuft in etwa mittig durch die Dosieröffnung 112. Der Zusatzstoffstrom 110 strömt dabei auf die Einlassöffnung 108 zu. Die Mittelachse A des Haupteintrittsstroms 106 und die Mittelachse B des Zusatzstoffstroms 110 sind im vorliegenden Beispiel koaxial angeordnet. Bei einer rechteckigen Ausgestaltung der Eintrittsöffnung 108 kann die Mittelachse B des Zusatzstoffstroms 110 in einer Mittelebene des Haupteintrittsstroms 106 liegen. Die Mittelebene des Haupteintrittsstroms 106 umfasst dann die Mittelachse A des Haupteintrittsstroms 106 und ist im Wesentlichen parallel zu dem zumindest einem seitlichen Wandabschnitt 124 der Mischkammer 102 angeordnet.

Durch das Aufeinanderprallen des Haupteintrittsstroms 106 und des Zusatzstoffstroms 110 vermischen sich der gasförmige Haupteintrittsstrom 106 und der flüssige Zusatzstoffstrom 110 in der Mischkammer 102. Zudem führt das direkte Aufeinanderprallen des Haupteintrittsstroms 106 mit dem Zusatzstoffstrom 110 zu einer Aufsplittung, Aufspreizung oder Aufspaltung des Zusatzstoffstroms 110, so dass sich der Zusatzstoffstrom 110 im Inneren der Mischkammer 102 verteilt.

Die Anordnung und Ausgestaltung der Einlassöffnung 108 und der Dosieröffnung 112 und dem damit verbundenen Einbringen des Zusatzstoffstroms 110 und des Haupteintrittsstroms 106 in entgegengesetzter Richtung in die Mischkammer 102 bewirkt auch bei einer geringen Strömung des Haupteintrittsstroms 106, beispielsweise bei geringer Last der Brennkraftmaschine, eine gute Vermischung mit dem Zusatzstoffstrom 110. Ein "Durchsprühen" des Zusatzstoffes durch die Mischkammer 102, beispielsweise ohne oder nur mit geringem Kontakt des Zusatzstoffes mit dem Haupteintrittsstrom 106, kann größtenteils vermieden werden.

Die Strömungsverhältnisse im Inneren der Mischkammer 102 hängen von den Eigenschaften der Masseströme 110, 106 ab und sind aufgrund des in der Regel wesentlich größeren Massestroms 106 lastabhängig.

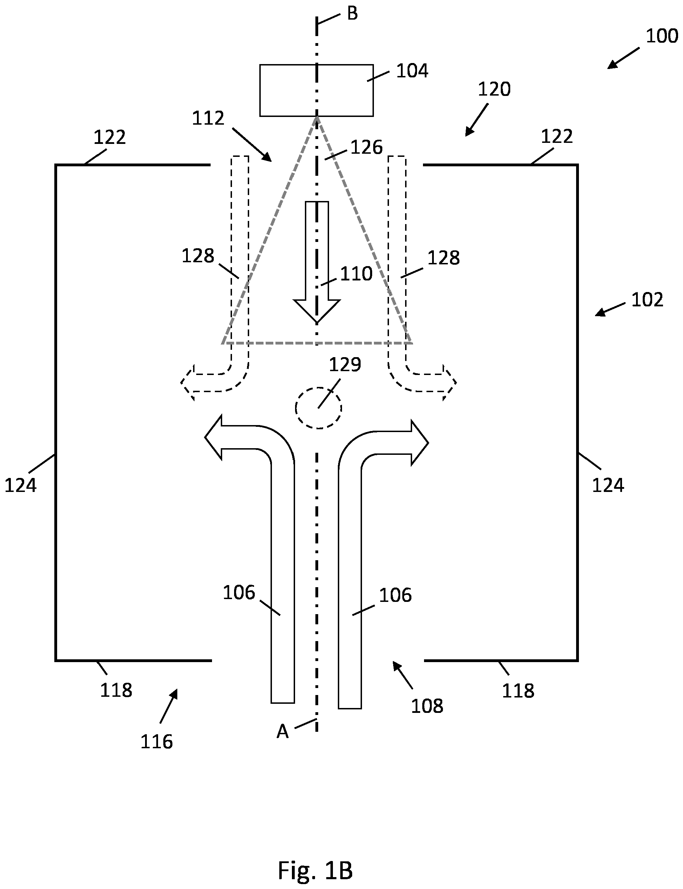

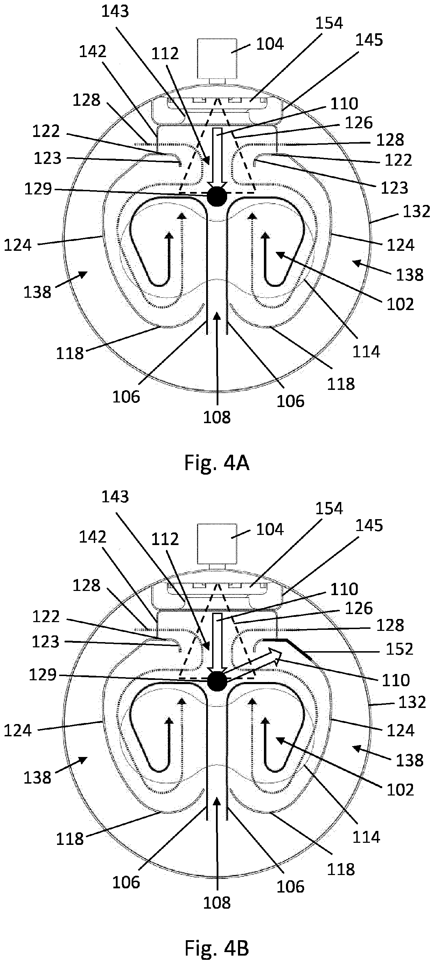

Fig. 1B zeigt eine schematische Darstellung einer weiteren Ausführungsform der erfindungsgemäßen Vorrichtung 100, in der zusätzlich eine optionale gasförmige Hinterströmung 128 dargestellt ist. Die Hinterströmung 128 ist zusammen mit dem Zusatzstrom 110 (Tröpfchenstrom) durch die Dosieröffnung 112 in die Mischkammer 102 einbringbar. Die Hinterströmung 128 unterstützt das Einbringen des Zusatzstoffstroms 110 in die Mischkammer, indem sich die Hinterströmung 128 mit dem Zusatzstoffstrom 110 vermischt und ein so entstehendes Gas-Zusatzstoffgemisch durch die Dosieröffnung 112 in die Mischkammer 102 einströmt. Im Inneren der Mischkammer 102 treffen der Haupteintrittsstrom 106 und die Hinterströmung 128 in einem (idealisierten) Staupunkt 129 aufeinander. Durch das Aufeinandertreffen werden der Haupteintrittsstrom 106 und das Gas-Zusatzstoffgemisch derart abgelenkt, dass die Strömungsrichtung des Haupteintrittsstroms 106 und die Strömungsrichtung der Hinterströmung 128 nach dem Aufeinandertreffen im Staupunkt 129 im Wesentlichen senkrecht zu der Mittelachse A des Haupteintrittsstroms 106 oder zu der Mittelachse B des Zusatzstoffstroms 110 verläuft. In anderen Worten ausgedrückt werden die Strömungen 106, 128 nach ihrem Aufeinandertreffen bezüglich der Mittelachsen A, B radial nach außen abgelenkt und strömen auf den seitlichen Wandabschnitt 124 zu. Durch das Aufeinandertreffen vermischen sich der Haupteintrittsstrom 106, der Zusatzstoffstrom 110 und die Hinterströmung 128 und es kommt sowohl zu einer Verdampfung des Zusatzstoffs in der Mischkammer 102 als auch zu einer Vermischung der genannten Stoffströme. Durch die Ablenkung der Strömungsrichtung nach außen in Richtung des seitlichen Wandabschnitts 124 kann außerdem die Verweildauer des Zusatzstoffes in der Mischkammer 102 erhöht werden, was wiederum zu einer besseren Verdampfung des Zusatzstoffes führt. Bei einem Auftreffen der abgelenkten Gasströme 106, 110, 128 auf den seitlichen Wandabschnitt 124 kommt es dort zu einer Verdampfung bisher nicht verdampfter Zusatzstofftröpfchen. Nach dem Auftreffen der Gasströme 106, 110, 128 auf dem seitlichen Wandabschnitt 124 werden die Gasströme 106, 110, 128 erneut abgelenkt und entlang des seitlichen Wandabschnitts 124 nach oben bzw. unten geleitet (vgl. Fig. 4A bis 4C). Dies führt zu einer Verwirbelung oder einer Drallbildung der Gasströme 106, 110, 128, was eine weitere Vermischung und Verdampfung vorteilhaft unterstützt.

Die Lage des Staupunkts 129 richtet sich im Wesentlichen nach den Eigenschaften der Masseströme des Haupteintrittsstroms 106 und der Hinterströmung 128, da der Massestrom des flüssigen Zusatzstoffstroms 110 in der Regel wesentlich kleiner ist als die der gasförmigen Masseströme 106, 128. Liegen feste geometrische Verhältnisse vor, verlagert sich der Staupunkt 129 auch bei unterschiedlichen Lastzuständen der Brennkraftmaschine nicht oder nur wenig.

Fig. 2 zeigt eine perspektivische Darstellung einer Eingangsseite 130 einer Ausführungsform der erfindungsgemäßen Vorrichtung 100. Die Mischkammer 102 ist zumindest abschnittsweise von einem zylinderförmigen Gehäuse 132 umgeben, wobei das Gehäuse 132 einen Gaseinlass auf der Eingangsseite 130 aufweist. Der Gaseinlass entspricht dem gesamten Querschnitt des Gehäuses 132.

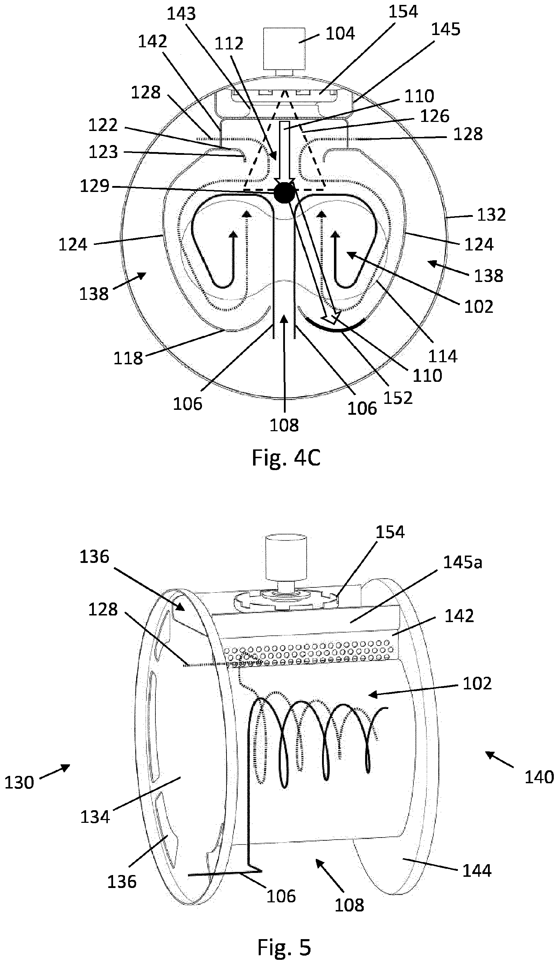

An der Eingangsseite 130 ist eine Gasführungskomponente 134 angeordnet, die als kreisrunde Platte mit selektiv verteilten Öffnungen 136 ausgebildet ist, durch die der Gasstrom in einen Spalt 138 zwischen dem Gehäuse 132 und der Mischkammer 102 (s. Fig. 4) strömen kann.

Die Öffnungen 136 der Gasführungskomponente 134 sind in einem radialen Randbereich angeordnet. Ein zentraler Bereich der Gasführungskomponente 134 bildet einen Teil des Wandabschnitts 124. In einem Bereich benachbart zu der Einlassöffnung 108 der Mischkammer 102 ist in der Gasführungskomponente 134 keine Öffnung 136 vorgesehen. Dadurch wird verhindert, dass zumindest ein Teil des Gasstroms die Öffnung 108 ohne wesentliche Ablenkung anströmt, sodass dieser nicht direkt in die Mischkammer 102 einströmen kann. Die Öffnungen 136 sind derart ausgestaltet, dass der durch die Öffnungen 136 in den Spalt 138 einströmende Gasstrom abgelenkt und aufgeteilt wird, nämlich in einen vergleichsweise kleinen Teilstrom, der zu der Dosiereinrichtung 104 strömt, in einen etwas größeren Teilstrom, der zu der Dosieröffnung 112 gelangt, und in einen vergleichsweise großen Teilstrom, der zu der Einlassöffnung 108 hin strömt. Durch deren Anströmung erwärmt der Gasstrom zudem die Gasführungskomponente 134 und damit den seitlichen Wandabschnitt 124 der Mischkammer 102.

Fig. 3 zeigt eine perspektivische Darstellung einer Ausgangsseite 140 der in Fig. 2 beschriebenen Ausführungsform. Eine Auslassöffnung 114 in einer Axialwand 144, die ebenfalls einen Teil des Wandabschnitts 124 der Mischkammer 102 bildet, weist einen brillenförmigen Querschnitt auf, beispielsweise in Form einer liegenden Acht, wobei der Querschnitt der Auslassöffnung 114 kleiner ist als der Querschnitt der Mischkammer 102. Ein in das Gehäuse 132 und dann in die Mischkammer 102 einströmender Gasfluss kann nur über die Auslassöffnung 114 aus der Mischkammer 102 austreten. Die Auslassöffnung 114 der Mischkammer 102 bildet somit einen Gasauslass der Vorrichtung 100. Das Gehäuse 132 selbst weist keinen Gasauslass auf.

Fig. 4A zeigt eine Schnittdarstellung der in Fig. 2 beschriebenen Ausführungsform. Die Mischkammer 102 ist durch den ersten Wandabschnitt 118, den zweiten Wandabschnitt 122 und den seitlichen Wandabschnitt 124 begrenzt. In der beschriebenen zylindrischen Ausführungsform der Vorrichtung 100 weist die Mischkammer 102 jeweils zwei erste Wandabschnitte 118, zwei zweite Wandabschnitte 122 und zwei seitliche Wandabschnitte 124 (gebildet durch Teile der Komponente 134 bzw. der Wand 144) auf. Die ersten Wandabschnitte 118 der Mischkammer 102, welche durch die Einlassöffnung 108 getrennt sind, sind jeweils zumindest abschnittsweise konkav gekrümmt ausgestaltet, insbesondere in Form eines flachen U. Sie entfalten dadurch eine Trichterwirkung für die Einlassöffnung 108.

Die Dosieröffnung 112 ist derart angeordnet und ausgestaltet, dass ein Teil des Gasstroms in dem Gehäuse 132 als Hinterströmung 128 zusammen mit dem Zusatzstoffstrom 110 durch die Dosieröffnung 112 in die Mischkammer 102 strömt. Die Dosiereinrichtung 104 ist von dem Gehäuse 132 getragen und beabstandet von der Einlassöffnung 108 angeordnet.

Die ersten Wandabschnitte 118 können in anderen Ausführungsformen aber auch andersartig gekrümmt sein. Die Krümmung der ersten Wandabschnitte 118 kann eine Drallbildung der Gasströme im Inneren der Mischkammer 102 unterstützen. Insbesondere können die ersten Wandabschnitte 118 als eine Art Umlenkung fungieren, der eine Stauströmung, welche aufgrund der im Staupunkt 129 aufeinandertreffenden Ströme 106, 110, 128 (einströmender Haupteintrittsstrom 106, entgegengesetzt zum Haupteintrittsstrom 106 einströmender Zusatzstoffstrom 110 sowie Hinterströmung 128) entsteht, entlang der gekrümmten Fläche der ersten Wandabschnitte 118 wieder in Richtung der Dosieröffnung 112 lenkt. Die zwischen der Einlassöffnung 108 und der Dosieröffnung 112 liegenden seitlichen Wandabschnitte 124 sind ebenfalls zumindest abschnittsweise gekrümmt ausgebildet. Die Krümmungen der einzelnen Wandabschnitte 118, 122, 124 sind an die zu erwartenden Bedingungen bei Betrieb der Vorrichtung 100 angepasst, um eine Drall- oder Wirbelstruktur in dem Inneren der Mischkammer 102 zu erzeugen.

Zwischen dem Gehäuse 132 und der Mischkammer 102 ist zumindest abschnittsweise der Spalt 138 ausgebildet, der bei Betrieb der Vorrichtung 100 von zumindest einem Teil des durch den Gaseinlass, insbesondere durch die Öffnungen 136 der Gasführungskomponente 134 (vgl. Fig. 2), in den Spalt 138 eintretenden Gasstroms durchströmt wird. Die Gasführungskomponente 134 dient also dazu, den Gasstrom in dem Spalt 138 und/oder in den Spalt 138 zu beeinflussen. Weitere Komponenten können bei Bedarf zur Gestaltung des Strömungsmusters in dem Spalt 138 angeordnet sein.

Eine weiter unten näher beschriebene Strömungsleiteinrichtung 142 ist zwischen dem Spalt 138 und der Dosieröffnung 112 angeordnet. Sie beeinflusst die Bildung der Hinterströmung 128. Ein Kragen 123, der an dem Wandabschnitt 122 ausgebildet ist und der in das Innere der Mischkammer 102 ragt, erleichtert das Einströmen der Hinterströmung 128 in die Kammer 102. Der Kragen 123 lenkt auch entlang des Wandabschnitts 124 strömendes Gas wieder in das Innere der Mischkammer 102 ab, um die Drall- oder Wirbelbildung zu unterstützen.

Die Dosiereinrichtung 104 wird von einer Strömungsleiteinheit 154 vor einem direkten Anströmen von Gas geschützt, was nachstehend noch eingehender erläutert wird. Ferner ist ein Abschirmblech 145 mit einem zu der Dosiereinrichtung 104 hin ragenden Kragen 143 vorgesehen. Seitliche Randabschnitte 145A des Abschirmblechs 145 unterbinden einen seitlichen Abstrom von Gas aus dem Eindosierbereich in den Spalt 138, und umgekehrt (siehe Fig. 5).

Das Innere der Mischkammer 102 steht zumindest über die Einlassöffnung 108 mit dem Inneren des Gehäuses 132 in Verbindung. Im Inneren der Mischkammer 102 treffen bei Betrieb der Vorrichtung 100 der Haupteintrittsstrom 106 und der Zusatzstoffstrom 110 aufeinander, wobei der Zusatzstoffstrom 110 zusammen mit der Hinterströmung 128 durch die Dosieröffnung 112 und der Haupteintrittsstrom 106 durch die Einlassöffnung 108 in die Mischkammer 102 einströmt. Eine daraus resultierende Stauströmung ermöglicht eine großräumige Verteilung des Gas-Zusatzstoff-Gemischs innerhalb der Mischkammer 102. Die begrenzenden Wandabschnitte 118, 122, 124 der Mischkammer 102, d.h. die ersten Wandabschnitte 118, die zweiten Wandabschnitte 122 und die seitlichen Wandabschnitte 124, dienen als Verdampferbleche und werden außenseitig von der durch die Öffnungen 136 in den Spalt 138 einströmenden Abgasströmung umströmt und damit aufgeheizt, wodurch eine Verbesserung der Verdampfung des Zusatzstoff-Gemischs im Inneren der Mischkammer 102 erreicht wird.

Die Ausbildung des im Inneren der Kammer 102 erzeugten Strömungsmusters der Ströme 106, 110, 128 hängt - neben der geometrischen Ausbildung der Komponenten der Vorrichtung 100 - auch von dem Betriebszustand ab, d.h. von den Eigenschaften des Gaststroms (der wiederum vom Lastzustand der Brennkraftmaschine abhängt) und der Eindosierungscharakteristik des Zusatzstoffes. Dies wird anhand der nachfolgenden Figuren erläutert.

Fig. 4B zeigt zusätzlich zu Fig. 4A eine schematische Darstellung der Verteilung des Zusatzstoffstroms 110 in der Mischkammer 102 bei einer relativ hohen Einströmgeschwindigkeit des Haupteintrittsstroms 106. Strömt der Haupteintrittsstrom 106 mit relativ hoher Geschwindigkeit in die Mischkammer 102 ein, so wird der Zusatzstoffstrom 110 zusammen mit der Hinterströmung 128 in Richtung einer Auftrefffläche 152 abgelenkt, wobei die Auftrefffläche an einem oberen Wandabschnitt 124, in der Nähe der Dosieröffnung 112, angeordnet ist.

Fig. 4C zeigt im Gegensatz zu Fig. 4B eine schematische Darstellung der Verteilung des Zusatzstoffstroms 110 in der Mischkammer 102 bei einer relativ niedrigen Einströmgeschwindigkeit des Haupteintrittsstroms 106. Strömt der Haupteintrittsstrom 106 mit relativ niedriger Geschwindigkeit in die Mischkammer 102 ein, so wird der Zusatzstoffstrom 110 zusammen mit der Hinterströmung 128 in Richtung einer Auftrefffläche 152 abgelenkt, wobei die Auftrefffläche an einem unteren Wandabschnitt 124, in der Nähe der Einlassöffnung 108, angeordnet ist.

Die Lage des Staupunkts 129 bleibt im Wesentlichen konstant und ist unabhängig von der Einströmgeschwindigkeit der Haupteintrittsströmung 106, da die Haupteintrittsströmung 106 und die Hinterströmung 128 - wie erläutert - im Wesentlichen von den geometrischen Verhältnissen abhängig sind (z.B. vom Verhältnis der Größe und/oder Ausgestaltung der Öffnungen für den Haupteintrittsstrom 106 und die Hinterströmung 128) und daher in einem festen Verhältnis zueinander stehen. Unabhängig von der Einströmgeschwindigkeit der Haupteintrittsströmung 106 führt die sich im Inneren der Mischkammer 102 ausbildende Stauströmung zu einer effizienten Verdampfung des Zusatzstoffstroms 110, da die Stauströmung den Zusatzstoffstrom 110 radial nach außen auf die Verdampferflächen lenkt und die geometrische Ausgestaltung der Verdampferflächen zu einer Drallbildung der Stauströmung im Inneren der Mischkammer 102 führt, und somit die Verweildauer des Zusatzstoffstroms 110 in der Mischkammer 102 verlängert wird.

Fig. 5 zeigt eine perspektivische Darstellung der Ausführungsform aus Fig. 2 ohne Gehäuse 132. Der auf der Eingangsseite 130 der Vorrichtung 100 durch die Öffnungen 136 der Gasführungskomponente 134 einströmende Gasstrom teilt sich u.a. in den Haupteintrittsstrom 106 und die Hinterströmung 128 auf. Der Haupteintrittsstrom 106 strömt durch die Eintrittsöffnung 108 in die Mischkammer 102. Die Hinterströmung 128 strömt durch die Dosieröffnung 112, der die Stromleiteinrichtung 142 vorgelagert ist, in die Mischkammer 102. Die Strömungsleiteinrichtung 142 ist im vorliegenden Beispiel ein bereichsweise gelochtes (separates) Blechteil. Die Ausgestaltung der Lochung begrenzt die Hinterströmung 128.

Die zwei entgegensetzt eingebrachten Strömungen 106, 128 treffen in der Mischkammer 102 aufeinander und bilden die bereits mehrfach beschriebene Stauströmung, die in Zusammenspiel mit der geometrischen Ausgestaltung der Mischkammer 102 zur Entstehung einer komplexen Drall- oder Wirbelstruktur führt.

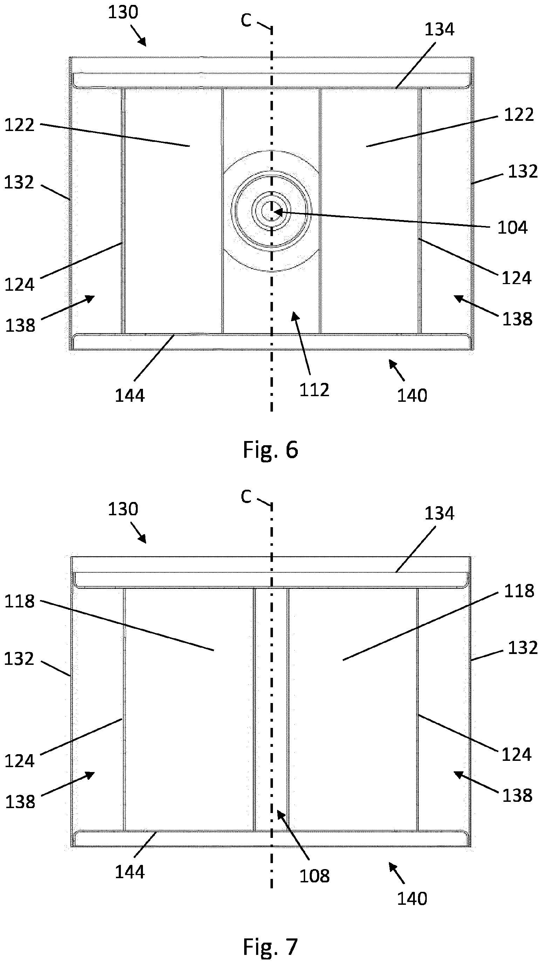

Fig. 6 zeigt eine Schnittdarstellung der Ausführungsform aus Fig. 2 in einer Ebene die senkrecht zu der Mittelachse B des Zusatzstoffstroms 110 steht, wobei eine Sicht aus dem Inneren der Mischkammer 102 in Richtung der Dosiereinrichtung 104 dargestellt ist. Die Mischkammer 102 ist in Längsrichtung, also senkrecht zu der Strömungsachse C des Gasstroms gesehen, auf der Eingangsseite 130 durch die Gasführungskomponente 134 und auf der Ausgangsseite 140 durch die Axialwand 144 begrenzt. Sie sind in das zylindrische Gehäuse 132 eingesetzt. Zwischen den plattenartigen Komponenten 134, 144 sind die die Kammer 102 bildenden Wandabschnitte 118, 122, 124 angeordnet. Diese sind an zwei im Wesentlichen baugleichen gekrümmten Blechbauteilen ausgebildet (eines rechts der Achse C, eines links davon), die voneinander beabstandet sind, sodass die ersten Wandabschnitte 118 und die zweiten Wandabschnitte 122 die rechteckigen Öffnungen 108 bzw. 112 bilden (siehe auch Fig. 7).

Fig. 7 zeigt eine weitere Schnittdarstellung der Ausführungsform aus Fig. 2 in einer Ebene die senkrecht zu der Mittelachse A Haupteintrittsstroms 106 steht, wobei eine Sicht aus dem Inneren der Mischkammer 102 in Richtung der Einlassöffnung 108 dargestellt ist. Die durch den ersten Wandabschnitt 118 ausgebildete Einlassöffnung 108 ist - wie vorstehend bereits erwähnt - in dieser Ausführungsform im Wesentlichen rechteckig ausgestaltet. Die Einlassöffnung 108 ist vorliegend kleiner ausgeformt als die Dosieröffnung 112. Bei gleichbleibendem Abgasgegendruck kann so eine höhere Einströmgeschwindigkeit des Haupteintrittsstroms 106 gegenüber einer Einströmgeschwindigkeit der Hinterströmung 128 erreicht werden.

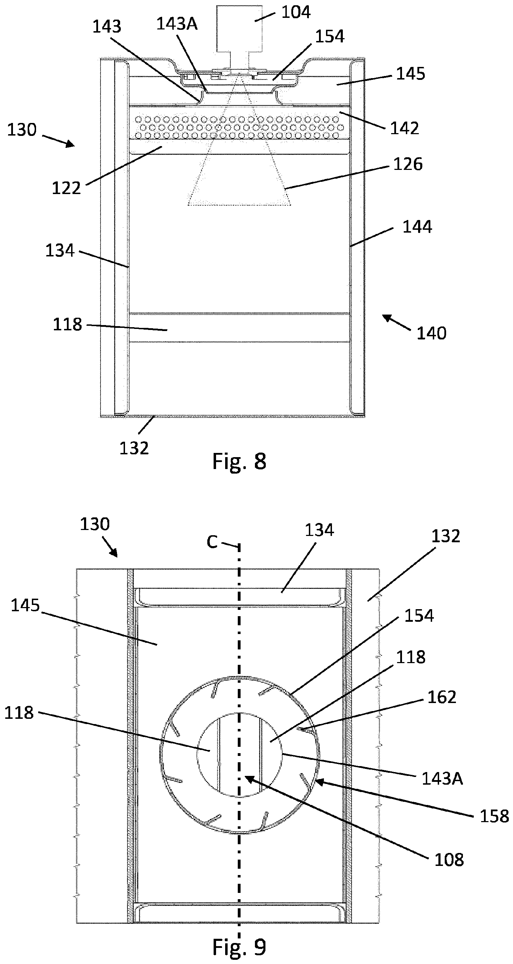

Fig. 8 zeigt eine Schnittdarstellung der Ausführungsform aus Fig. 2 in einer Ebene, die die Mittelachse B enthält. Der durch die Öffnungen 136 der Gasführungskomponenten 134 in das Gehäuse 132 einströmende Gasstrom gelangt nach dem Durchtritt der Stromleiteinrichtung 142 durch die Dosieröffnung 112 in die Mischkammer 102. Die Stromleiteinrichtung 142 dient zur Beeinflussung der Hinterströmung 128 vor dem Eintritt in die Dosieröffnung 112. Sie fungiert auch als eine Abschirmung des Sprühkegels 126. Eine weitere Funktion der Stromleiteinrichtung 142 kann eine zusätzliche Drallerzeugung in der Hinterströmung 128 sein. Eine drallbeaufschlagte Hinterströmung 128 kann zu einer Stabilisierung des Sprühkegel 126 beitragen. Es können - anders als dargestellt - ebene und/oder gekrümmte Leitflächen vorgesehen sein, die eine derartige Drallbildung bewirken. Bei Bedarf kann auch eine (teilweise) Vermischung der Hinterströmung 128 mit dem Zusatzstoffstrom 110 in der Mischkammer 102 vorgesehen sein.

In Fig. 8 ist auch zu sehen, dass die Strömungsleiteinheit 154 einen Kragen 143A aufweist, der in den Kragen 143 des Abschirmblechs 145 ragt.

Fig. 9 zeigt eine Darstellung der Vorrichtung 100 aus Fig. 2 in einem Schnitt durch die Strömungsleiteinheit 154 mit Drallerzeugung (bevorzugt ein separates Blechteil) in einer Ebene senkrecht zu der Mittelachse B. Die Strömungsleiteinheit 154 ist in dieser Ausführungsform kreisrund ausgestaltet und weist in Umfangsrichtung verteilt angeordnete Strömungsleitflächen 162 auf, die jeweils einer Spülöffnung 158 zugeordnet sind. Die Strömungsleitflächen 162 sind aus einer Mantelfläche der Strömungsleiteinheit 154 gebogenen Abschnitte, die in das Innere der Strömungsleiteinheit 154 hinein ragen. Ein Gasstrom der auf der Eingangsseite 130, insbesondere durch die Öffnungen 136 der Gasführungskomponente 134 in das Gehäuse 132 strömt, wird durch eine der Öffnungen 136 zu einem Teil in Richtung der Dosiereinrichtung 104 geleitet. Dieser Gasanteil strömt als Spülstrom dann durch die Strömungsleiteinheit 154 zu der Dosiereinrichtung 104. Dabei wird der Spülstrom durch die Strömungsleitflächen 162 in eine Drallbewegung oder Rotationsbewegung um die Mittelachse B des Zusatzstoffstroms 110 versetzt, bevor der Spülstrom auf den Zusatzstoffstrom 110 trifft. Der Spülstrom verhindert die Bildung von Ablagerungen im Bereich einer Düse der Dosiereinrichtung 104. Derartige Strömungsleitflächen 162 sind bei der Ausführungsform gemäß Fig. 2 nicht vorgesehen, was anhand der Fig. 5 gut zu erkennen ist.

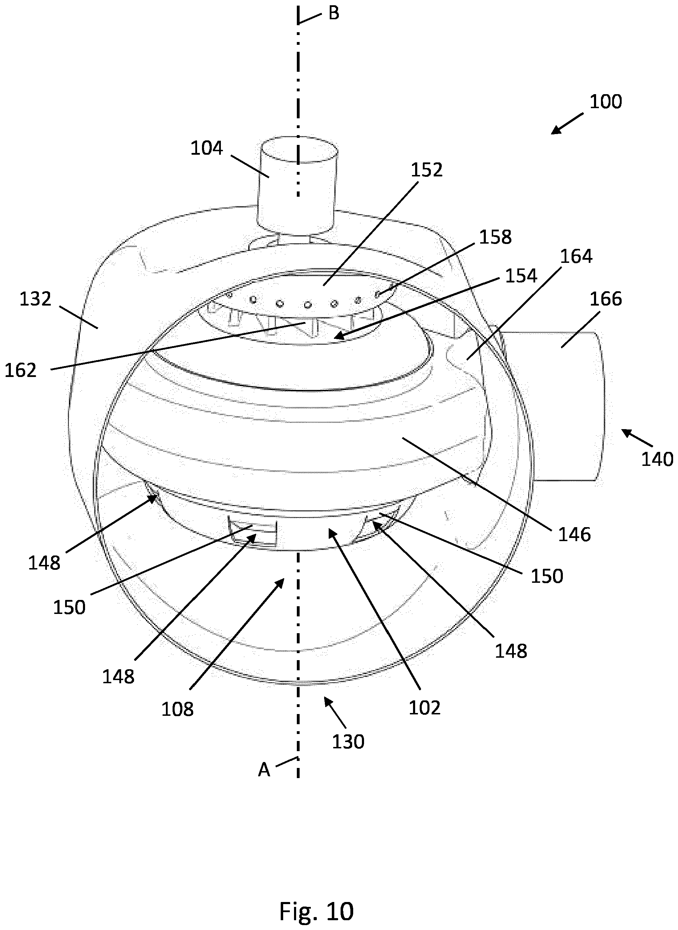

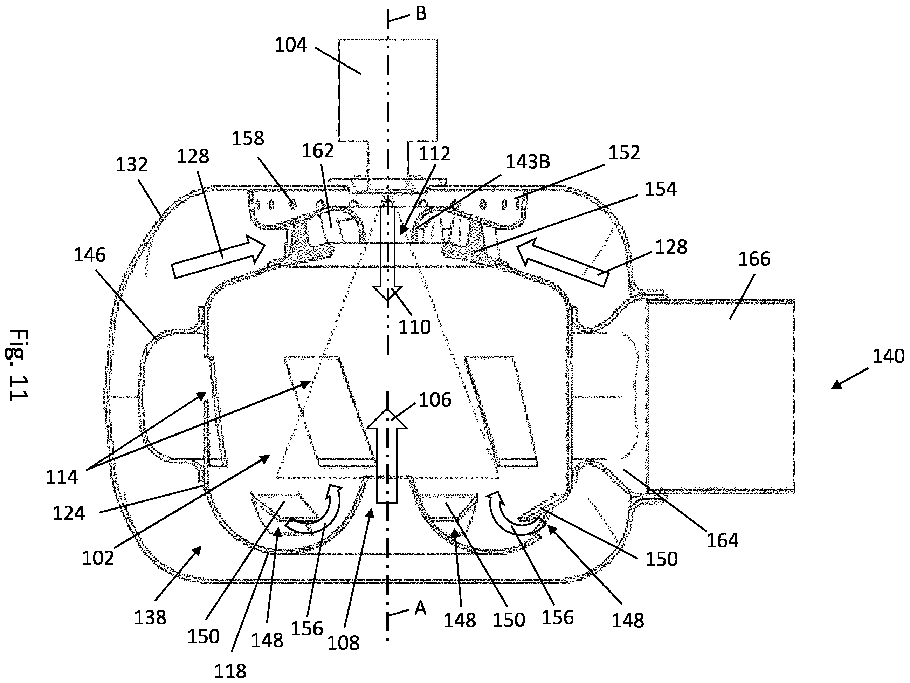

Fig. 10 zeigt eine perspektivische Darstellung einer Eingangsseite 130 einer weiteren Ausführungsform der erfindungsgemäßen Vorrichtung 100. Fig. 11 zeigt einen Schnitt durch selbige.

Die Mischkammer 102 weist eine toroidale Grundform auf und umfasst eine Mehrzahl von Auslassöffnungen 114 (siehe Fig. 11), die mit einem Kanal 146 in Verbindung stehen, der die Mischkammer 102 in Umfangsrichtung umgibt. Er wird durch eine ringförmige Blechschale gebildet, die an dem zumindest abschnittsweise geraden Seitenwandabschnitt 124 befestigt ist und die die Auslassöffnungen 114 überdeckt.

Der Kanal 146 weist einen Auslass 164 auf, der wiederum mit einem Austrittsrohr 166 verbunden ist. Durch das Austrittsrohr 166 verlässt der Gasstrom, der vorher vollständig durch die Mischkammer 102 geströmt ist, die Vorrichtung 100.

Die Mischkammer 102 umfasst mehrere, in Umfangsrichtung vorzugsweise regelmäßig verteilte Nebenöffnungen 148, durch die bei Betrieb der Vorrichtung 100 ein Nebeneintrittsstrom 156 des Gasstroms in die Mischkammer 102 strömt. Jeder Nebenöffnung 148 ist zumindest ein Strömungsleitabschnitt 150 zugeordnet, der derart ausgestaltet und angeordnet ist, dass der Nebeneintrittsstrom 156 bei dem Eintritt in die Mischkammer 102 abgelenkt wird, im gezeigten Beispiel in die gekrümmten Wandabschnitte 118 hinein. Der durch die Nebenöffnungen 148 in die Mischkammer 102 einströmende Nebeneintrittsstrom 156 bewirkt ein Hinterspülen des Haupteintrittsstroms 106, was zu einer Beschleunigung des Haupteintrittsstroms 106 führen kann. Der zumindest eine Strömungsleitabschnitt 150 kann insbesondere als ebener und/oder gekrümmter Wandabschnitt ausgestaltet sein, sodass ein senkrechtes, d.h. orthogonal zu einem Wandabschnitt der Mischkammer 102, Einströmen des Nebeneintrittsstroms 156 in die Mischkammer 102 verhindert wird. Die Strömungsleitabschnitte 150 können einen Gasstrom mit einer zusätzlichen Drallkomponente erzeugen und/oder bereits vorhandene Drallkomponenten verstärken. Durch die Nebenöffnungen 148 können zudem Druckverluste in der Mischkammer 102 gesenkt werden.

Der Dosiereinrichtung 104 ist eine bevorzugt separat ausgebildete Abschirmeinrichtung 152 (z.B. ein Blechteil) zugeordnet, die mehrere Spülöffnungen 158 aufweist, durch die ein Teil des Gasstroms als Spülstrom in einen Einspritzbereich der Dosiereinrichtung 104 gelangt und diese vor der Bildung von Ablagerungen schützt. Die Abschirmeinrichtung 152 umfasst einen Kragen 143B, der in Richtung der Mischkammer 102 ragt.

Ferner ist eine Strömungsleiteinheit 154 (mit oder ohne Drallerzeugung) vorgesehen, die zwischen der Abschirmeinrichtung 152 und der Mischkammer 102 angeordnet ist.

Die Strömungsleiteinheit 154 mit Drallerzeugung kann als separates Gussbauteil ausgebildet sein und umfasst Strömungsleitflächen 162, die als Drallklappen wirken, um eine Rotation der durch die Strömungseinheit 154 strömenden Hinterströmung 128 um die Mittelachse B des Zusatzstoffstroms 110 zu erzeugen. Die um die Mittelachse B des Zusatzstoffstroms 110 rotierende Hinterströmung 128 trifft auf den Kragen 143B der Abschirmeinrichtung 152, wodurch die Hinterströmung 128 in das Innere der Mischkammer 102 abgelenkt wird. Der Kragen 143B schützt gleichzeitig den Sprühkegel 126 vor übermäßiger Verwehung.

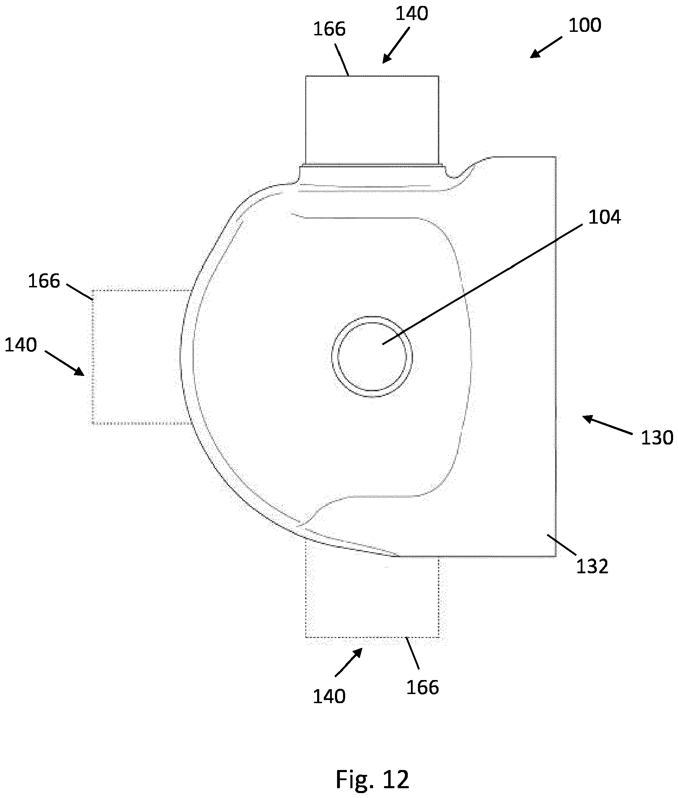

Fig. 12 zeigt eine Draufsicht der kugelförmigen Ausführungsform aus Fig. 10 mit alternativ angeordneten Austrittsrohren 166 (gestrichelt dargestellt). Die kugelförmige Ausführungsform der Vorrichtung 100 bietet den Vorteil, dass das Austrittsrohr 166 je nach Einbaulage der Vorrichtung 100 in einer Abgasanlage an einer beliebigen Ausgangsseite 140 der Vorrichtung 100 angeordnet sein kann.

Gemeinsam ist den beschriebenen Ausführungsformen, dass in der jeweiligen Vorrichtung eine Prallströmung erzeugt wird, welche einen eingebrachten Zusatzstoff, beispielsweise eine Harnstofflösung, mit einem Gasstrom (z.B. Abgasstrom) vermischt. Optional kann eine Hinterströmung 128 bereitgestellt werden, die mit dem Zusatzstoffstrom 110 in die Mischkammer 102 eingebracht wird, wodurch sich eine Stauströmung einstellt. Dabei werden die Stoffströme radial nach außen gedrängt, so dass die schon teilweise vermischten Ströme auf eine Verdampferfläche zu strömen, die vergleichsweise groß sein kann. Die Prallströmung und/oder die Stauströmung kann in eine Wirbelstruktur eingebettet sein, die durch die Ausgestaltung der Mischkammer 102 erzeugt wird und die eine Vermischung des (verdampften) Zusatzstoffes mit dem Gasstrom verbessert. Die Funktionalität der Vorrichtung 100 ist auch bei vergleichsweise geringen Abgasmassenströmen gegeben. Auch bei geringerer Abgasströmung und wenig Verwehung des tröpfchenförmigen Zusatzstoffes kann eine hohe Tropfenverdampfung erreicht werden. Vorteile der erfindungsgemäßen Vorrichtung 100 sind demnach eine effiziente Verdampfung des Zusatzstoffes und dessen zuverlässige Vermischung mit dem Gasstrom über einen großen Lastbereich. Durch die erfindungsgemäße Vorrichtung 100 ergeben sich zudem bauraumtechnisch Vorteile, beispielsweise aufgrund der Möglichkeit, sie modular aufzubauen und/oder sie mit nur geringem konstruktiven Aufwand an die jeweils vorliegenden Bedingungen anzupassen.

Die anhand der vorstehend beschriebenen Ausführungsformen beispielhaft erläuterten Details lassen sich auf vielfältige Weise kombinieren, um die gewünschten Strömungsverhältnisse zu erreichen.

### Bezugszeichenliste

- 100: Vorrichtung
- 102: Mischkammer
- 104: Dosiereinrichtung
- 106: Haupteintrittsstrom
- 108: Einlassöffnung
- 110: Zusatzstoffstrom
- 112: Dosieröffnung
- 114: Auslassöffnung
- 116: erste Seite der Mischkammer
- 118: erster Wandabschnitt
- 120: zweite Seite der Mischkammer
- 122: zweiter Wandabschnitt
- 123: Kragen
- 124: seitlicher Wandabschnitt
- 126: Sprühkegel
- 128: Hinterströmung
- 129: Staupunkt
- 130: Eingangsseite
- 132: Gehäuse
- 134: Gasführungskomponente
- 136: Öffnung
- 138: Spalt
- 140: Ausgangsseite
- 142: Stromleiteinrichtung
- 143, 143A, 143B: Kragen
- 144: Axialwand
- 145: Abschirmblech
- 145A: Randabschnitt
- 146: Kanal
- 148: Nebenöffnung
- 150: Strömungsleitabschnitt
- 152: Abschirmeinrichtung
- 154: Strömungsleiteinheit
- 158: Spülöffnung
- 162: Strömungsleitfläche
- 164: Auslass
- 166: Austrittsrohr
- A: Mittelachse des Haupteintrittsstroms
- B: Mittelachse des Zusatzstoffstroms
- C: Strömungsachse Gasstrom

## Patentansprüche

1. Vorrichtung (100) zum Vermischen eines Zusatzstoffes mit einem Gasstrom, insbesondere für eine Abgasanlage eines Fahrzeugs mit einer Brennkraftmaschine, umfassend
eine von zumindest eines Teils des Gasstroms durchströmbare Mischkammer (102) mit zumindest einer Einlassöffnung (108) durch die bei Betrieb der Vorrichtung (100) ein Haupteintrittsstrom (106) des Gasstroms in die Mischkammer (102) strömt, mit zumindest einer Dosieröffnung (112) und mit zumindest einer Auslassöffnung (114); und
eine Dosiereinrichtung (104), mittels derer durch die Dosieröffnung (112) ein Zusatzstoffstrom (110) des Zusatzstoffes in die Mischkammer (102) einbringbar ist, wobei die Einlassöffnung (108) und die Dosieröffnung (112) derart angeordnet und ausgebildet sind, dass der Haupteintrittsstrom (106) und der Zusatzstoffstrom (110) in im Wesentlichen entgegengesetzten Richtungen in die Mischkammer (102) strömen, so dass der Haupteintrittsstrom (106) und der Zusatzstoffstrom (110) aufeinander prallen.

2. Vorrichtung (100) nach Anspruch 1,
wobei die die Einlassöffnung (108) und die Dosieröffnung (112) an einander gegenüberliegenden Wandabschnitten (118, 122) der Mischkammer (102) angeordnet sind.

3. Vorrichtung (100) nach einem der vorstehenden Ansprüche,
wobei eine Mittelachse (A) des Haupteintrittsstroms (106) und eine Mittelachse (B) des Zusatzstoffstroms (110) im Wesentlichen koaxial angeordnet sind oder wobei eine Mittelachse (B) des Zusatzstoffstroms (110) in einer Mittelebene des Haupteintrittsstroms (106) liegt.

4. Vorrichtung (100) nach Anspruch 3,
wobei die Auslassöffnung (114) der Mischkammer (102) an einem Wandabschnitt angeordnet ist, der in Richtung der Mittelachse (A, B) des Haupteintrittsstroms (106) oder des Zusatzstoffstroms (110) gesehen zwischen der Dosieröffnung (112) und der Einlassöffnung (108) liegt.

5. Vorrichtung (100) nach Anspruch 3 oder 4,
wobei die Auslassöffnung (114) der Mischkammer (102) einen Gasauslass der Vorrichtung (100) bildet.

6. Vorrichtung (100) nach einem der vorstehenden Ansprüche,
wobei die Mischkammer (102) in einer Ebene senkrecht zu der Mittelachse (A, B) des Haupteintrittsstroms (106) und des Zusatzstoffstroms (110) kreisförmig oder rechteckig ausgebildet ist.

7. Vorrichtung (100) nach einem der vorstehenden Ansprüche,
wobei zumindest ein die Einlassöffnung (108) aufweisender Wandabschnitt (118) der Mischkammer (102) zumindest abschnittsweise gekrümmt ausgestaltet ist, insbesondere wobei der zumindest eine Wandabschnitt (118) benachbart der Einlassöffnung (108) U-förmig ausgestaltet ist und/oder, wobei zwischen der Einlassöffnung (108) und der Dosieröffnung (112) liegende Wandabschnitte (124) zumindest abschnittsweise gekrümmt ausgebildet sind.

8. Vorrichtung (100) nach einem der vorstehenden Ansprüche,
wobei die Mischkammer (102) zumindest eine Nebenöffnung (148) aufweist, durch die bei Betrieb der Vorrichtung (100) ein Nebeneintrittsstrom (156) des Gasstroms in die Mischkammer (102) strömt, insbesondere wobei der Nebenöffnung (148) zumindest ein Strömungsleitabschnitt (150) zugeordnet ist, insbesondere ein ebener und/oder gekrümmter Wandabschnitt, der derart ausgestaltet und angeordnet ist, dass der Nebeneintrittsstrom (156) bei dem Eintritt in die Mischkammer (102) abgelenkt wird.

9. Vorrichtung (100) nach einem der vorstehenden Ansprüche,
wobei der Dosiereinrichtung (104) eine Abschirmeinrichtung (152) zugeordnet ist, die zumindest eine Spülöffnung (158) aufweist, durch die ein Teil des Gasstroms als Spülstrom in einen Einspritzbereich der Dosiereinrichtung (104) gelangt, insbesondere wobei der Spülöffnung (158) eine Strömungsleiteinheit (154) zugeordnet ist.

10. Vorrichtung (100) nach einem der vorstehenden Ansprüche,
wobei die Mischkammer (102) zumindest abschnittsweise von einem Gehäuse (132) umgeben ist, das einen Gaseinlass für den Gasstrom aufweist, wobei das Innere der Mischkammer (102) zumindest über die Einlassöffnung (108) mit dem Inneren des Gehäuses (132) in Verbindung steht.

11. Vorrichtung (100) nach Anspruch 10,wobei die Auslassöffnung (114) der Mischkammer (102) mit einem Kanal (146) in Verbindung steht, durch den der aus der Mischkammer (102) austretende Gasstrom aus dem Gehäuse (132) abgeführt wird, insbesondere wobei der Kanal (146) die Mischkammer (102) außenseitig in einem Bereich zwischen der Dosieröffnung (112) und der Einlassöffnung (108) in Umfangsrichtung zumindest abschnittsweise, insbesondere vollständig umgibt.

12. Vorrichtung (100) nach Anspruch 10 oder 11,
wobei die Dosiereinrichtung (104) von dem Gehäuse (132) getragen und beabstandet von der Einlassöffnung (108) angeordnet ist.

13. Vorrichtung (100) nach einem der Ansprüche 10 bis 12,
wobei zwischen der Mischkammer (102) und dem Gehäuse (132) zumindest abschnittsweise ein Spalt (138) gebildet ist, der in Betrieb von zumindest einem Teil des durch den Gaseinlass in das Gehäuse (132) eintretenden Gasstroms durchströmt wird, insbesondere wobei in oder in Strömungsrichtung vor dem Spalt (138) zumindest eine Gasführungskomponente (136) angeordnet ist, um den Gasstrom in dem Spalt (138) und/oder in den Spalt (138) zu beeinflussen.

14. Vorrichtung (100) nach einem der Ansprüche 11 bis 13,
wobei die Dosieröffnung (112) derart angeordnet und ausgestaltet ist, dass ein Teil des Gasstroms in dem Gehäuse (132) als Hinterströmung (128) zusammen mit dem Zusatzstoffstrom (110) durch die Dosieröffnung (112) in die Mischkammer (102) strömt, insbesondere wobei eine Stromleiteinrichtung (142, 154) vorgesehen ist, die zur Beeinflussung der Hinterströmung (128) vor dem Eintritt in die Dosieröffnung (112) ausgebildet ist, wobei die Stromleiteinrichtung (142, 154) bevorzugt ein separates Bauteil umfasst und/oder wobei die Stromleiteinrichtung (142, 154) durch zumindest eine Komponente gebildet ist, die - falls vorgesehen - an der Abschirmeinrichtung (152) und/oder an der Mischkammer (102) ausgebildet ist, insbesondere in Form eines an - falls vorgesehen - der Abschirmeinrichtung (152) und/oder an der Mischkammer (102) ausgebildeten Kragens (143).

15. Vorrichtung (100) nach einem der Ansprüche 9 bis 14,
wobei die Vorrichtung (100) derart ausgestaltet ist, dass der Haupteintrittsstromanteil (106) an dem Gasstrom in Betrieb größer ist als der Anteil der Hinterströmung (128) und/oder der Anteil der Hinterströmung (128) größer ist als der Anteil des Spülstroms, wobei der Haupteintrittsstrom (106) 70% bis 30%, bevorzugt 60% bis 40%, insbesondere 55% bis 45% des Gasstroms ausmacht, und/oder die Hinterströmung (128) 60% bis 30%, bevorzugt 50% bis 35%, insbesondere 45% bis 40% des Gasstroms ausmacht, und/oder der Spülstrom 20% bis 1%, bevorzugt 15% bis 5%, insbesondere 12% bis 8% des Gasstroms ausmacht.

16. Vorrichtung (100) nach einem der vorstehenden Ansprüche,
wobei die Vorrichtung (100) ferner zumindest eine weitere Dosiereinrichtung (104) umfasst, mittels derer durch die Dosieröffnung (112) der Mischkammer (102) oder durch eine weitere Dosieröffnung (112) der Mischkammer (102) ein weiterer Zusatzstoffstrom (110) des Zusatzstoffes in die Mischkammer (102) einbringbar ist, wobei die Einlassöffnung (108) und die Dosieröffnung (112) oder die weitere Dosieröffnung (112) derart angeordnet und ausgebildet sind, dass der Haupteintrittsstrom (106) und zumindest einer der Zusatzstoffströme (110) in im Wesentlichen entgegengesetzten Richtungen in die Mischkammer (102) strömen, so dass der Haupteintrittsstrom (106) und der Zusatzstoffstrom (110) aufeinander prallen.

17. Abgasanlage, die eine Vorrichtung (100) gemäß zumindest einem der vorstehenden Ansprüche umfasst.
